Europäisches Patentamt

European Patent Office

Office européen des brevets

(19)

(11) Veröffentlichungsnummer : **0 094 374**
**B1**

(12) **EUROPÄISCHE PATENTSCHRIFT**

(45) Veröffentlichungstag der Patentschrift :
30.07.86

(21) Anmeldenummer : 83890072.8

(22) Anmeldetag : 03.05.83

(51) Int. Cl.⁴ : **G 01 N 21/35**

(54) **Verfahren zur kontinuierlichen Messung der Masse von Aerosolteilchen in gasförmigen Proben sowie Vorrichtung zur Durchführung des Verfahrens.**

(30) Priorität : 06.05.82 AT 1788/82

(43) Veröffentlichungstag der Anmeldung :
16.11.83 Patentblatt 83/46

(45) Bekanntmachung des Hinweises auf die Patenterteilung : 30.07.86 Patentblatt 86/31

(84) Benannte Vertragsstaaten :
FR GB IT SE

(56) Entgegenhaltungen :
DE-A- 2 362 935
DE-A- 2 557 508
DE-A- 2 721 909
DE-B- 2 365 605
FR-A- 2 097 471
FR-A- 2 279 094
US-A- 3 390 605
US-A- 3 696 247
Aerosol Science and Technology 1: 225-234, (1982)

(73) Patentinhaber : **AVL GESELLSCHAFT FÜR VERBREN-
NUNGSKRAFTMASCHINEN UND MESSTECHNIK
MBH.PROF.DR.DR.H.C.HANS LIST
Kleiststrasse 48
A-8020 Graz (AT)**

(72) Erfinder : **Krempl, Peter
Stiftingtalstrasse 71/4/12
A-8010 Graz (AT)**
Erfinder : **Schindler, Wolfgang
Merangasse 19
A-8010 Graz (AT)**

(74) Vertreter : **Krause, Walter, Dr. Dipl.-Ing.
Postfach 200 Singerstrasse 8
A-1014 Wien (AT)**

**Beschreibung**

Die Erfindung betrifft ein Verfahren zur kontinuierlichen Messung der Masse von Aerosolteilchen in gasförmigen Proben, insbesondere im Auspuffgas von Brennkraftmaschinen, wobei ein die Probe enthaltendes Prüfvolumen und ein Vergleichsvolumen mit elektromagnetischer Strahlung im optischen Rayleighbereich durchstrahlt werden und die Differenz der Strahlungsintensitäten nach Durchgang durch die beiden Volumina als Meßwert verwendet wird und eine Vorrichtung nach dem Oberbegriff des Anspruchs 4.

Aus z. B. SAE Technical Paper 780108 : « The Physical and Chemical Character of Diesel Particulate Emission — Measurement Techniques and Fundamental Considerations » der Autoren W. H. Lipkea, J. H. Johnsen, C. T. Vuk oder aus M. Birkle, « Meßtechnik für Immisionsschutz » Oldenburg, München, Wien 1979, S. 130 sind Verfahren zur kontinuierlichen Überprüfung des Aerosolteilchengehaltes von gasförmigen Proben bekannt, bei denen die partikelbeladene Probe von Licht durchstrahlt und die Absorption oder Streuung durch die Partikel gemessen wird. In einem der bekannten Verfahren sind die verwendeten Strahlungswellenlängen von der selben Größenordnung wie die Radien der Partikeln ; die Messung findet im sogenannten optischen Mie-Bereich statt. In diesem Bereich ist der Absorptionskoeffizient pro Masse und daher auch die gemessene Gesamtabsorption sehr stark von der Teilchengröße abhängig, weshalb die Gesamtmasse der Aerosolteilchen nicht ohne gleichzeitige Bestimmung zumindest der mittleren Teilchengröße bestimmt werden kann. Da beispielsweise im Zusammenhang mit der Messung von Aerosolteilchen im Auspuffgas von Brennkraftmaschinen bekannt ist, daß die mittlere Teilchengröße vom verwendeten Brennstoff bzw. seinen Zusätzen und vom Betriebszustand der Brennkraftmaschine abhängt, liefert die Messung nach diesem bekannten Verfahren nur eine grobe Abschätzung der tatsächlich emittierten Gesamtmasse an Aerosolteilchen. Bei einem weiteren der bekannten Verfahren wird mit Strahlung von größeren Wellenlängen, z. B. im Infrarot-Bereich, gearbeitet. Bei diesen Wellenlängen ist der Absorptionskoeffizient pro Masse unabhängig von der Teilchengröße ; die Messung erfolgt im sogenannten optischen Rayleigh-Bereich. Da jedoch der Absorptionsquerschnitt von Aerosolteilchen mit wachsender Wellenlänge der einfallenden Strahlung stark abnimmt, sinkt aufgrund von äußeren Beeinflussungen die mit dem nur sehr geringen Meßsignal erzielbare Genauigkeit bei diesem bekannten Verfahren stark ab.

Aus diesem Grunde sind spezielle Meßverfahren bekannt geworden, um Änderungen der gemessenen Absorption infolge einer tatsächlich variierenden Partikelemission von apparativ bedingten Schwankungen, z. B. der Intensität der Strahlungsquelle, zu unterscheiden. Um auch die sehr geringe Absorption bei niedrigen Partikelkonzentrationen — im Bereich von einigen mg/m³ — mit hinreichender Genauigkeit zu messen, ist aus der Zeitschrift Aerosol Science and Technology 1 : 225-234 (1982) der Autoren F. R. Faxvog und D. M. Roessler ein Verfahren bekannt, bei welchen Strahlung gleicher Intensität und Frequenz, vorzugsweise aus ein und derselben Quelle, sowohl ein die Probe enthaltendes Prüfvolumen als auch ein Vergleichsvolumen durchsetzt, wobei aber in beiden Volumina dasselbe Gas vorhanden sein muß, da im verwendeten Frequenzbereich nicht nur von den eigentlich gesuchten Probenpartikeln absorbiert wird, sondern auch von den Komponenten des Trägergases. Diese Komponenten absorbieren zwar im allgemeinen in definierten Resonanzabsorptionsbändern, die jedoch im mittleren und fernen Infrarot-Bereich, das heißt bei Wellenlängen größer als 2 μm, sehr dicht liegen. Aus diesem Grunde ist es bei den bekannten derartigen Verfahren notwendig, nach der Bestimmung der Absorption der partikelbeladenen gasförmigen Probe die Probenpartikel auszufiltern und eine neuerliche Absorptionsmessung am Trägergas alleine durchzuführen. Eine Vollstrommessung in der Abgasleitung ist daher nicht möglich ; man kann nur Probeströme vermessen, was naturgemäß erhöhten Aufwand und Unsicherheiten im Meßergebnis mit sich bringt.

Aufgabe der vorliegenden Erfindung ist es, die angeführten Nachteile der bekannten Verfahren zu vermeiden und ein Verfahren der eingangs genannten Art so auszubilden, daß auf einfache Weise Messungen des Partikelgehaltes von gasförmigen Proben durchführbar sind, auch wenn dieser nur sehr gering ist.

Dies wird gemäß der vorliegenden Erfindung dadurch erreicht, daß zur Bestimmung der in der Probe enthaltenen spezifischen Masse an breitbandig absorbierenden — insbesondere graphitischen — Teilchen elektromagnetische Strahlung mit einer Wellenlänge von 3,8 bis 4,15 μm dient.

Die Erfindung basiert somit auf der überraschend gefundenen Tatsache, daß im Infrarot-Bereich, bzw. im optischen Rayleigh-Bereich für die zu messenden Aerosolteichen Frequenzbereiche existieren, in denen keines der im Trägergas, also insbesonders im Auspuffgas von Brennkraftmaschinen, vorkommenden Gase einen Beitrag zur zu messenden Absorption liefert, womit die Absorption der Strahlung in diesen Frequenzbereichen ausschließlich von kondensierten Verbrennungsprodukten herrührt.

Da, wie bereits eingangs ausgeführt, der Absorptionskoeffizient der Aerosolteilchen in diesem Frequenzbereich sehr klein ist, sind spezielle Meßanordnungen erforderlich, um Partikelkonzentrationen, beispielsweise bis in den Bereich von einigen mg/m³, noch mit ausreichender Genauigkeit erfassen zu können. Durch die gleichzeitige Durchstrahlung des die Probe enthaltenden Prüfvolumens und des Vergleichsvolumens und Feststellung der Differenz in den Strahlungsintensitäten nach Durchgang der beiden Volumina ist dies auf einfache Weise möglich, wobei aufgrund der obenstehenden Ausführungen hinsichtlich der Unabhängigkeit der in diesem Frequenzbereich meßbaren Absorption von der Zusammensetzung des Trägergases die Anforderungen an das Gasgemisch im Vergleichsvolumen sich praktisch auf Freiheit von eigentlich nachzuweisenden Aerosolteilchen beschränken, womit sich im Vergleichsvolumen Raumluft oder ein ähnlich sauberes Gasgemisch befinden kann und die aufwendige Filterung des partikelbeladenen Probengases vor der Vergleichsmessung entfällt.

Weiters hat sich überraschend gezeigt, daß bei Abänderung des besprochenen erfindungsgemäßen Verfahrens, zur Bestimmung der in der Probe enthaltenen spezifischen Gesamtmasse an Aerosolteilchen elektromagnetische Strahlung eines Frequenzbandes dient, dessen Zentrum im Wellenlängenbereich 3,35 bis 3,5 μm liegt und dessen Halbwertsbreite höchstens gleich 0,3 μm ist. Es ist also neben dem bereits angegebenen Wellenlängenbereich, in welchem die meßbare Absorption insbesonders den graphitischen Teilchen zuordenbar ist, noch ein weiterer Wellenlängenbereich für die verwendete elektromagnetische Strahlung wählbar, in dem ebenfalls eine eindeutige Zuordnung der gemessenen Absorption zu kondensierten Verbrennungsprodukten in der Auspuffgasprobe möglich ist.

In einer Ausgestaltung des eingangs genannten Verfahrens nach der Erfindung ist vorgesehen, daß zur getrennten Bestimmung der graphitischen und der organisch löslichen Anteile an Aerosolteilchen zusätzlich auch die Resonanzabsorption der organisch löslichen Anteile bei einer Wellenlänge im Bereich von 3,35 bis 3,5 μm gemessen wird. Im Abgas von Brennkraftmaschinen sind diese organisch löslichen Anteile hauptsächlich kondensierte Kohlenwasserstofftröpfchen. Die Messung der Massenbeladung der gasförmigen Proben mit diesen Teilchen bei oder nahe der Resonanzfrequenz setzt voraus, daß der an dieser Stelle natürlich vorhandene Absorptionsuntergrund infolge der breitbandigen graphitischen Absorption bekannt ist. Da die graphitischen Aerosolteilchen aufgrund der verwendeten Wellenlänge entsprechend Rayleighs Gesetzen absorbieren, kann aus der Messung bei einer bestimmten Frequenz die Absorption im gesamten Gültigkeitsbereich dieser Gesetze, insbesonders an der Stelle der interessierenden Resonanzabsorption bestimmt werden. Damit kann aus der im besagten Wellenlängenbereich von 3,35 bis 3,5 μm gemessenen Absorption auf die Absorption und damit auf die Massenbeladung der gasförmigen Probe mit jenen Partikeln geschlossen werden, welche die Resonanzabsorption hervorrufen.

Bei einer Vorrichtung zur Messung der Absorption eines Prüfvolumens, bei der Strahlung aus einer Strahlungsquelle sowohl ein Prüf- als auch ein Vergleichsvolumen durchsetzt und die Absorption in bestimmten Wellenlängenbereichen bestimmt wird, bei der im Strahlengang nach der Strahlungsquelle und vor den das Prüfvolumen beziehungsweise Vergleichsvolumen enthaltenden Meßräumen ein Strahlteiler angeordnet ist, die Teilstrahlen nach Durchgang durch den jeweiligen Meßraum über eine Umlenkeinrichtung wieder vereinbar sind und eine Auswahleinrichtung vorgesehen ist, welche mit vorgebbarer Periode jeweils nur einen der beiden Teilstrahlen zu einem Strahlengang angeordneten gemeinsamen Detektor durchläßt (siehe z. B. US-A-3 390 605), ist erfindungsgemäß vorgesehen, daß zur kontinuierlichen Messung der Masse von Aerosolteilchen in gasförmigen Proben, insbesondere Auspuffgasen die Strahlungsquelle derart ausgebildet ist, daß sie Strahlung in einem Wellenlängenbereich von 3,35 bis 3,5 μm und/oder 3,8 bis 4,15 μm abgibt, daß der Strahlteiler ebenso wie die Umlenkeinrichtung eine planparallele Scheibe aufweist, welche für die verwendete Strahlung transparent ist und deren Oberfläche im Brewster-Winkel gegen den auftreffenden Strahl geneigt liegt, und daß die Auswahleinrichtung einen vor dem Detektor angeordneten rotierenden Polarisationsanalysator aufweist, der je nach seiner Drehstellung nur die entsprechend polarisierten Teile der vereinigten Teilstrahlen durchläßt, sowie daß der das entstehende Wechselsignal führende Ausgang des Detektors mit einer Auswerteschaltung in Verbindung steht.

In einer Variante ist statt der Strahlungsquelle, die Strahlung in einem Wellenlängenbereich von 3,35 bis 3,5 μm und/oder 3,8 bis 4,15 μm abgibt, vorsegehen daß sich im Strahlengang nach der Strahlungsquelle bzw. vor dem Detektor ein wellenlängenselektives Element befindet, das nur Strahlung in einem Wellenlängenbereich von 3,35 bis 3,5 μm und 3,8 bis 4,15 μm durchläßt.

Durch die Verwendung von wellenlängenselektiven Elementen im Strahlengang können auch Lichtquellen mit einem weiteren Frequenzspektrum verwendet werden.

Durch die Anordnung der planparallelen Scheibe im Brewster-Winkel gegen den auftreffenden Strahl wird erreicht, daß nur n-polarisierte Strahlteile reflektiert werden und die p-polarisierten voll durchgehen. Es können also Prüfvolumen und Vergleichsvolumen mit Strahlteilen durchstrahlt werden, die aufgrund ihrer verschiedenen Polarisation eindeutig identifizierbar und über den vor dem Detektor angeordneten rotierenden Polarisationsanalysator auch getrennt dem Detektor zur Feststellung ihrer Intensität zuführbar sind. Es wird ein in seiner Periode der des Analysators entsprechendes Wechselsignal erhalten, dessen Größe ein Maß für den gesuchten Partikelgehalt darstellt. Der Vorteil dieser Anordnung liegt in der Tatsache, daß aufgrund der geometrischen Bedingungen der Polarisation die vom Detektor registrierte Intensität immer zeitlich konstant ist, soferne die Teilstrahlen gleiche Intensität aufweisen und sich keine Aerosolteilchen im Prüfvolumen befinden. Eine Dejustierung des Polarisators kann praktisch nicht stattfinden, womit Schwankungen in der Intensität der einfallenden Strahlung praktisch ohne Auswirkung auf die Messung sind.

Es könnte aber auch beispielsweise eine rotierende Lochscheibe vorgesehen sein, deren Löcher derart angeordnet sind, daß sie die beiden Teilstrahlen abwechselnd mit bekannter Periode auf den Detektor fallen läßt. Dabei ist jedoch eine genaue Bearbeitung und eine sorgfältige Justierung der Lochscheibe notwendig, um sicherzustellen, daß zu keiner Zeit die volle Intensität beider Teilstrahlen bzw. keiner der Teilstrahlen den Detektor trifft, d. h. es dürfen keine Hell- oder Dunkelspitzen am Detektor auftreten.

Es ist auch möglich, im Strahlengang nach einer Strahlungsquelle und vor den das Prüf- bzw. Vergleichsvolumen enthaltenden Meßräumen einen Strahlteiler anzuordner, wobei im Strahlengang nach dem Prüf- bzw. Vergleichsvolumen je ein eigener Detektor angeordnet ist. Die beiden Detektoren stehen mit einer vorzugsweise nur die Differenz der Signale der beiden Detektoren registrierenden Auswerteschaltung in Verbindung. Die getrennten Detektoren sind dabei elektronisch derart geschaltet, daß das resultierende Nutzsignal mit der Strahlungsabsorption in der gasförmigen Probe eindeutig korreliert ist.

Die Erfindung wird im folgenden anhand des dargestellten Ausführungsbeispieles näher erläutert.

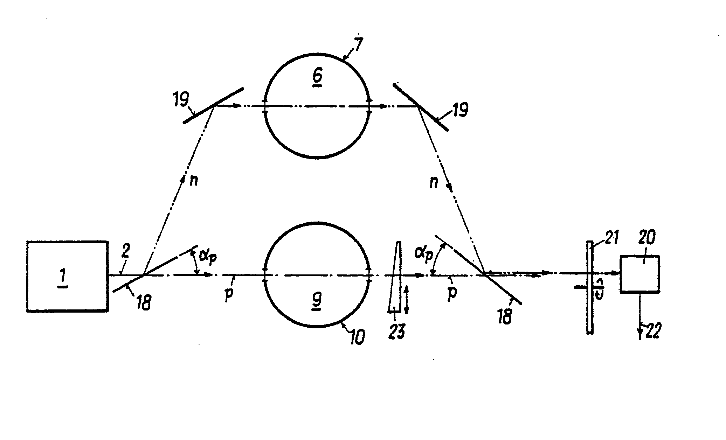

Die Zeichnung zeigt die schematische Darstellung einer Vorrichtung zur Durchführung eines erfindungsgemäßen Verfahrens.

Die dargestellte Vorrichtung zur kontinuierlichen Messung der Masse von Aerosolteilchen in gasförmigen Proben weist eine Strahlungsquelle 1 auf, deren entlang des Strahlenganges 2 abgegebene Strahlung vorerst auf eine planparallele Scheibe 18 trifft, welche für die verwendete Strahlung transparent ist und deren Oberfläche im Brewster-Winkel $\alpha p$ gegen den auftreffenden Strahl geneigt liegt, wodurch ein Strahlteiler geschaffen ist, der auf einfache Weise senkrecht zueinander polarisierte Teilstrahlen liefert. Aufgrund der physikalischen Gesetzmäßigkeiten bei einer derartig angeordneten Scheibe wird von der einfallenden unpolarisierten (d. h. der n-polarisierte Anteil hat ebenso wie der dazu senkrechtstehende p-polarisierte Anteil noch volle 100 % Intensität) Strahlung ein n-polarisierter Teilstrahl in Richtung zu einem Spiegel 19 reflektiert ; die p-polarisierten Anteile gehen voll durch die Scheibe 18 in Richtung zum Vergleichsvolumen 9 durch. Der Brewster-Winkel ist dabei wie folgt definiert :

$$\alpha p = \arctan n_0$$

wobei $n_0$ der Brechungsindex der verwendeten Scheibe 18 ist. Der durch die planparallele Scheibe gehende Anteil ist nicht vollständig polarisiert, sondern enthält noch Anteile von n-polarisierter Strahlung. Diese Anteile sind aber umso geringer, je höher der Brechungsindex $n_0$ ist. Wird beispielsweise für die planparallelen Scheiben 18 Germanium verwendet, dessen Brechungsindex bei den angegebenen infraroten Wellenlängen $n_0 = 4$ ist, so reduziert sich der Anteil von n-polarisierter Strahlung bei zweimaligem Durchgang durch die Scheiben auf 1 %.

Der im Brewster-Winkel reflektierte n-polarisierte Teilstrahl passiert nach der Ablenkung am Spiegel 19, der natürlich selbst keine polarisierenden Eigenschaften aufweisen darf, das Prüfvolumen 6 im Meßraum 7 und wird an einem weiteren Spiegel 19 zu einer zweiten, im Strahlengang des p-polarisierten, das Vergleichsvolumen 9 im Meßraum 10 passierenden Teilstrahl angeordneten Scheibe 18 abgelenkt.

Auch diese zweite Scheibe 18 ist wiederum im Brewster-Winkel $\alpha p$ gegen die Teilstrahlen gerichtet, was wiederum eine Reflexion der n-polarisierten Anteile und ein Durchgehen der p-polarisierten Anteile ergibt. Die nach der zweiten Scheibe 18 wieder vereinigten Teilstrahlen sind der Deutlichkeit halber nebeneinanderliegend eingetragen.

Vor einem Detektor 20 ist ein rotierender Polarisationsanalysator 21 angeordnet, der je nach seiner Drehstellung nur die entsprechend polarisierten Teile der vereinigten Teilstrahlen durchläßt, welche somit in zeitlicher Aufeinanderfolge am Detektor 20 registriert werden. Am Ausgang 22 des Detektors 20 wird ein Wechselsignal erhalten, das in der Periode der des Analysators 21 entspricht und dessen Größe der Differenz in der Intensität der Teilstrahlen gleicht. Sinnvollerweise wird über einen Abschwächer 23 die relative Intensität der beiden Teilstrahlen zueinander so eingestellt, daß bei partikelfreiem Prüfvolumen 6 am Detektor Signaldifferenz 0 festgestellt wird.

Bekannte Infrarotquellen und Detektoren zeigen unter Umständen Schwankungen ihrer Intensität bzw. Empfindlichkeit, welche bei längeren Meßzyklen das Ergebnis verfälschen können. Eine Möglichkeit dies zu verhindern besteht beispielsweise dann, mit Hilfe einer genormten Absorberscheibe die Anordnung kontinuierlich zu kalibrieren. Dazu wird auf hier nicht dargestellte Weise mit einer Periode, welche ein ganzzahliges Vielfaches R der Periode des Analysators 21 ist, ein Absorber definierter Absorption ins Prüf- oder Vergleichsvolumen eingebracht. Aus der Differenz der Meßwerte mit bzw. ohne den definierten Absorber erhält man das momentan gültige Produkt aus Quellintensität mal Detektorempfindlichkeit, mit dem der Meßwert ohne Absorber Kalibriert werden kann. Durch diese Anordnung wird zwar die zeitliche Auflösung der Vorrichtung um einen Faktor R schlechter, die Meßgenauigkeit jedoch wesentlich erhöht.

Anstelle der dargestellten Anordnung zur Polarisation der beiden Teilstrahlen wäre natürlich auch die Verwendung von üblichen Polarisatoren im Strahlengang möglich, was aber kostspieliger ist und die gesamte Einrichtung nicht unwesentlich verteuert.

Zur Durchführung einer entsprechenden Messung kann beispielsweise das Prüfvolumen 6 unmittelbar vom Auspuffgas einer zu testenden Brennkraftmaschine durchströmt werden, von dem es gilt, die Masse an absorbierenden Aerosolteilchen zu messen. Im Vergleichsvolumen 9 kann sich zu diesem Zwecke Raumluft oder ein ähnliches reines Gasgemisch befinden.

Die die Meßräume 7, 10 passierenden beiden Teilstrahlen werden entsprechend den jeweiligen Absorptionseigenschaften der im Prüfvolumen 6 bzw. Vergleichsvolumen 9 befindlichen Gase bzw. gasförmigen Proben abgeschwächt, wobei bei geeigneter Auswahl der Strahlungsparameter das vom Detektor erhaltene Differenzsignal unmittelbar der Massenbeladung des im Prüfvolumen 6 befindlichen Auspuffgases entspricht. So kann mit einer Strahlungsquelle 1, deren abgegebene Strahlung eine Wellenlänge im Bereich von 3,8 bis 4,15 μm aufweist, mit Hilfe der dargestellten Anordnung nach entsprechender Justierung unmittelbar die in der Probe enthaltene spezifische Masse an breitbandig absorbierenden, insbesonders graphitischen Teilchen bestimmt werden. Es sei hier darauf hingewiesen, daß es für das Funktionieren der erfindungsgemäßen Anordnung prinzipiell keinen Unterschied macht, ob eine schmalbandige Lichtquelle verwendet wird oder die gewünschte Frequenz entweder im Strahlengang 2 oder nach Durchgang durch die Prüf- und Vergleichsvolumina von Filtern selektiert wird. Soferne zusätzlich zur Messung im genannten Frequenzband (3,8 bis 4,15 μm) entweder in zeitlicher Aufeinanderfolge oder in einer zweiten Empfängereinheit auch die Resonanzabsorption bei einer Wellenlänge im Bereich von 3,35 bis 3,5 μm gemessen wird, kann mit einer solchen Anordnung die getrennte Bestimmung von graphitischen und nicht graphitischen bzw. organisch löslichen Anteilen an Aerosolteilchen durchgeführt werden, was für die Bestimmung des Einflusses der Änderung verschiedener Motorenparameter insbesonders in der Entwicklung neuer Motoren bzw. Verbrennungsverfahren sehr wichtig ist.

**Patentansprüche**

1. Verfahren zur kontinuierlichen Messung der Masse von Aerosolteilchen in gasförmigen Proben, insbesondere im Auspuffgas von Brennkraftmaschinen, wobei ein die Probe enthaltendes Prüfvolumen und ein Vergleichsvolumen mit elektromagnetischer Strahlung im optischen Rayleighbereich durchstrahlt werden und die Differenz der Strahlungsintensitäten nach Durchgang durch die beiden Volumina als Meßwert verwendet wird, dadurch gekennzeichnet, daß zur Bestimmung der in der Probe enthaltenen spezifischen Masse an breitbandig absorbierenden — insbesondere graphitischen — Teilchen elektromagnetische Strahlung mit einer Wellenlänge von 3,8 bis 4,15 μm dient.

2. Verfahren nach Anspruch 1, dadurch gekennzeichnet, daß zur getrennten Bestimmung der graphitischen und der organisch löslichen Anteile an Aerosolteilchen zusätzlich auch die Resonanzabsorption der organisch löslichen Anteile bei einer Wellenlänge im Bereich von 3,35 bis 3,5 μm gemessen wird.

3. Verfahren nach dem Oberbegriff des Anspruches 1, dadurch gekennzeichnet, daß zur Bestimmung der in der Probe enthaltenen spezifischen Gesamtmasse an Aerosolteilchen elektromagnetische Strahlung eines Frequenzbandes dient, dessen Zentrum im Wellenlängenbereich 3,35 bis 3,5 μm liegt und dessen Halbwertsbreite höchstens gleich 0,3 μm ist.

4. Vorrichtung zur Messung der Absorption eines Prüfvolumens (6), bei der Strahlung aus einer Strahlungsquelle (1) sowohl ein Prüf- (6) als auch ein Vergleichsvolumen (9) durchsetzt, und die Absorption in bestimmten Wellenlängenbereichen bestimmt wird, bei der im Strahlengang nach der Strahlungsquelle (1) und vor den das Prüfvolumen (6) beziehungsweise Vergleichsvolumen (9) enthaltenden Meßräumen (7, 10) ein Strahlteiler (18) angeordnet ist, die Teilstrahlen nach Durchgang durch den jeweiligen Meßraum über eine Umlenkeinrichtung (18, 19) wieder vereinigbar sind und eine Auswahleinrichtung (21) vorgesehen ist, welche mit vorgebbarer Periode jeweils nur einen der beiden Teilstrahlen zu einem im Strahlengang angeordneten gemeinsamen Detektor (20) durchläßt, dadurch gekennzeichnet, daß zur kontinuierlichen Messung der Masse von Aerosolteilchen in gasförmigen Proben, insbesondere Auspuffgasen die Strahlungsquelle (1) derart ausgebildet ist, daß sie Strahlung in einem Wellenlängenbereich von 3,35 bis 3,5 μm und/oder 3,8 bis 4,15 μm abgibt, daß der Strahlteiler ebenso wie die Umlenkeinrichtung eine planparallele Scheibe (18) aufweist, welche für die verwendete Strahlung transparent ist und deren Oberfläche im Brewster-Winkel (α p) gegen den auftreffenden Strahl geneigt liegt, und daß die Auswahleinrichtung einen vor dem Detektor angeordneten rotierenden Polarisationsanalysator (21) aufweist, der je nach seiner Drehstellung nur die entsprechend polarisierten Teile der vereinigten Teilstrahlen durchläßt, sowie daß der das entstehende Wechselsignal führende Ausgang (22) des Detektors (20) mit einer Auswerteschaltung in Verbindung steht.

5. Vorrichtung nach dem Oberbegriff des Anspruches 4, dadurch gekennzeichnet, daß zur kontinuierlichen Messung der Masse von Aerosolteilchen in gasförmigen Proben, insbesondere Auspuffgasen sich im Strahlengang (2) nach der Strahlungsquelle (1) oder vor dem Detektor (20) ein wellenlängenselektives Element befindet, das nur Strahlung in einem Wellenlängenbereich von 3,35 bis 3,5 μm und/oder 3,8 bis 4,15 μm durchläßt, daß der Strahlteiler ebenso wie die Umlenkeinrichtung eine planparallele Scheibe (18) aufweist, welche für die verwendete Strahlung transparent ist und deren Oberfläche im Brewster-Winkel (α p) gegen den auftreffenden Strahl geneigt liegt, und daß die Auswahleinrichtung einen vor dem Detektor angeordneten rotierenden Polarisationsanalysator (21) aufweist, der je nach seiner Drehstellung nur die entsprechend polarisierten Teile der vereinigten Teilstrahlen durchläßt, der das entstehende Wechselsignal führende Ausgang (22) des Detektors (20) mit einer Auswerteschaltung in Verbindung steht.

## Claims

1. A method for the continuous measurement of the mass of aerosol particles in gaseous samples, above all in the exhaust of internal combustion engines, with a test volume containing the sample and a corresponding reference volume being traversed by electromagnetic radiation in the optical Rayleigh range, and the difference in radiation intensities after passage through the two volumes being used as a measurement value, wherein the specific mass of — mainly graphitic — particles contained in the sample and characterized by broadband absorption is determined with the use of electromagnetic radiation of a wavelength of 3.8 to 4.15 μm.

2. A method according to claim 1, wherein for the separate determination of the graphitic and the organically soluble components of the aerosol particles the resonance absorption of the organically soluble component is measured in addition, at a wavelength ranging from 3.35 to 3.5 μm.

3. A method, in principle as described in claim 1, wherein the specific total mass of aerosol particles contained in the sample is determined with the use of electromagnetic radiation of a frequency band whose center is in the wavelength range of 3.35 to 3.5 μm and whose half value width does not exceed 0.3 μm.

4. A device for measuring the absorption of a test volume (6), in which radiation from a radiation source (1) passes through both a test volume (6) and a reference volume (9) and the absorption is measured in specific wavelength ranges, and in which a beam splitter (18) is positioned in the radiation path behind the radiation source (1) and in front of the test chambers (7, 10) containing the test volume (6) and the reference volume (9), respectively, and in which the partial beams are reunited via a deflection device (18, 19) after having gone through the respective test chamber, and in which a selector unit (21) is provided, opening with a given periodicity the passage to the detector (20) positioned in the radiation path for one of the two partial beams at a time, wherein for the continuous measurement of the mass of aerosol perticles in gaseous samples, above all in the exhaust of internal combustion engines, said radiation source (1) is configured such that the wavelength of the radiation emitted ranges from 3.35 to 3.5 μm and/or 3.8 to 4.15 μm, and wherein said beam splitter and said deflection device are each provided with a plane-parallel plate (18) which is transparent for the radiation used and whose surface is inclined relative to the incident beam at the Brewster angle ($\alpha$ p), and wherein

said selector unit is provided with a rotatable polarization analyzer (21) located in front of said detector, which analyzer will transmit only the suitably polarized components of the combined partial beams in accordance with its rotational position, and, finally, wherein the output (22) of said detector (20) carrying the resulting a.c signal is connected to an evaluation unit.

5. A device, in principle as described in claim 4, wherein for the continuous measurement of the mass of aerosol particles in gaseous samples, above all in the exhaust of internal combustion engines, a wavelength-selective element is provided in the radiation path (2) behind the radiation source (1) or in front of the detector (20) which will permit the passage of radiation of a wavelength ranging from 3.35 to 3.5 μm and/or 3.8 to 4.15 μm only, and wherein the beam splitter and the deflection device each are provided with a plane-parallel plate (18) which is transparent for the radiation used and whose surface is inclined relative to the incident beam at the Brewster angle ($\alpha$ p), and wherein said selector unit is provided with a rotatable polarization analyzer (21) located in front of the detector which analyzer will transmit only the suitably polarized components of the combined partial beams in accordance with its rotational position, and, finally, wherein the output (22) of said detector (20) carrying the resulting a. c. signal is connected to an evaluation unit.

## Revendications

1. Procédé pour la mesure continue de la masse de particules d'aérosol dans des échantillons gazeux, en particulier dans le gaz d'échappement de moteurs à combustion interne, dans lequel un volume à étudier, contenant l'échantillon, et un volume de comparaison sont traversés par un rayonnement électromagnétique dans le domaine optique de Rayleigh et dans lequel on utilise comme valeur de mesure la différence des intensités de rayonnement après passage à travers les deux volumes, caractérisé en ce que, pour déterminer la masse spécifique, contenue dans l'échantillon, de particules absorbantes en bande large — en particulier de particules graphitiques —, on utilise un rayonnement électromagnétique d'une longueur d'onde de 3,8 à 4,15 μm.

2. Procédé selon la revendication 1, caractérisé en ce que, pour déterminer séparément les proportions graphitiques et les proportions solubles dans les produits organiques, dans les particules d'aérosol, on mesure en outre l'absorption par résonance des proportions solubles dans un produit organique dans le cas d'une longueur d'onde de la plage allant de 3,35 à 3,5 μm.

3. Procédé selon le préambule de la revendication 1, caractérisé en ce que, pour déterminer la masse totale spécifique, contenue dans l'échantillon, de particules d'aérosol on utilise un rayonnement électromagnétique d'une bande de fréquence dont le centre se trouve sur la plage de longueur d'onde allant de 3,35 à 3,5 μm et dont la largeur de valeur moyenne est au maximum égale à 0,3 μm.

4. Dispositif pour mesurer l'absorption d'un volume d'essai (6), dans lequel un rayonnement provenant d'une source de rayonnement (1) traverse aussi bien un volume à étudier (6) qu'un volume de comparaison (9) et dans lequel on détermine l'absorption sur des plages déterminées de longueurs d'onde, dans lequel un séparateur de rayonnement (18) est disposé avant les espaces de mesure (7, 10) contenant le volume à étudier (6) et le volume de comparaison (9), dans lequel les rayonnements partiels peuvent être à nouveau réunis par l'intermédiaire d'un dispositif de déviation (18, 19), après avoir traversé l'espace de mesure respectif et dans lequel est prévu un dispositif de sélection (21) qui ne laisse respectivement passer, avec une périodicité prédéterminée, vers un détecteur commun (20) disposé sur le trajet du rayonnement, que l'un des deux rayonnements partiels, caractérisé en ce que, pour la mesure en continu de la masse des particules d'aérosol dans des échantillons gazeux, en particulier dans des gaz d'échappement, la source de rayonnement (1) est conçue de façon qu'elle émette un rayonnement sur une plage de longueurs d'onde allant de 3,35 à 3,5 μm et/ou 3,8 à 4,15 μm ; de façon que le séparateur de rayonnement présente, comme le dispostif de déviation, une plaque à plans parallèles (18) transparente pour le rayonnement utilisé et dont la surface est inclinée en formant l'angle

de Brewster (αp) avec le rayon incident ; et de façon que le dispositif de sélection présente un analyseur rotatif de polarisation (21) disposé avant le détecteur et qui, selon sa position angulaire, ne laisse passer que les portions de polarisation correspondante des rayons partiels réunis ; ainsi que de façon que la sortie (22) du détecteur (20) qui fournit le signal de changement qui apparaît soit en liaison avec un circuit de traitement.

5. Dispositif selon le préambule de la revendication 4, caractérisé en ce que, pour la mesure en continue de la masse des particules d'aérosol dans des échantillons gazeux, en particulier des gaz d'échappement, se trouve sur le trajet des rayons (2), après la source de rayonnement (1) ou avant le détecteur (20), un élément sélectif à l'égard des longueurs d'onde, qui ne laisse passer le rayonnement que sur une plage de longueurs d'onde allant de 3,35 à 3,5 μm et/ou 3,8 à 4,15 μm ; en ce que le séparateur de rayonnement présente, comme le dispositif de déviation, une plaque à plans parallèles (18) transparente pour le rayonnement utilisé et dont la surface est inclinée en formant l'angle de Brewster (αp) avec le rayon incident ; et en ce que le dispositif de sélection présente un analyseur rotatif de polarisation (21) disposé avant le détecteur et qui, selon sa position angulaire, ne laisse passer que les portions de polarisation correspondante des rayons partiels réunis ; ainsi qu'en ce que la sortie (22) du détecteur (20) qui fournit un signal de changement qui apparaît soit en liaison avec un circuit de traitement.

0 094 374

1